# EUROPÄISCHE PATENTSCHRIFT

(11) **EP 3 362 212 B1**
(45) Veröffentlichungstag und Bekanntmachung des Hinweises auf die Patenterteilung: **02.09.2020**
(21) Anmeldenummer: 17702368.6
(22) Anmeldetag: 31.01.2017
(51) Int. Cl.: B23B 27/00

(54) **SPANABHEBENDES WERKZEUG**
CUTTING TOOL
OUTIL D'USINAGE PAR ENLÈVEMENT DE COPEAUX

(30) Priorität: 22.03.2016 DE 102016105354
(43) Veröffentlichungstag der Anmeldung: 22.08.2018
(73) Patentinhaber: Hartmetall-Werkzeugfabrik Paul Horn GmbH, 72072 Tübingen (DE)
(72) Erfinder: NAGEL, Rudolf J., 73765 Neuhausen (DE)
(74) Vertreter: Witte, Weller & Partner Patentanwälte mbB
(86) Internationale Anmeldenummer: PCT/EP2017/052038
(87) Internationale Veröffentlichungsnummer: WO 2017/162357

(56) Entgegenhaltungen:
- WO-A1-2004/020130
- DE-A1-102015 014 583
- DE-U1- 8 902 529
- US-A1- 2011 200 402
- US-A1- 2012 148 353

## Beschreibung

Die vorliegende Erfindung betrifft ein Werkzeug zur spanenden Bearbeitung eines Werkstücks gemäß dem Oberbegriff des Anspruchs 1 und des Anspruchs 15, welches vorzugsweise als Innendrehmeißel ausgestaltet ist und zur Bearbeitung von Innenflächen von Bohrungen, z.B. zum Stechdrehen von umlaufenden Nuten in die Bohrungswand, zum Feindrehen der Bohrungswand, zum Gewindedrehen in einer Bohrungswand oder dergleichen geeignet ist.

Das erfindungsgemäße Werkzeug hat gemäß Oberbegriff der Ansprüche 1 und 15 einen Schneideinsatz mit einem Schaft, welcher sich entlang einer Schneideinsatzlängsachse erstreckt, und mit zumindest einer Schneide. Der Schneideinsatz ist zumindest teilweise aus einem ersten Werkstoff, vorzugsweise Hartmetall. Das erfindungsgemäße Werkzeug weist des Weiteren einen Werkzeughalter auf, welcher sich J Im entlang einer Halterlängsachse erstreckt und an einem stirnseitigen Ende zur Aufnahme des Schneideinsatz-Schafts eine Schneideinsatzaufnahme aufweist, welche als topfförmige Ausnehmung im Werkzeughalter ausgestaltet ist. Des Weiteren weist das erfindungsgemäße Werkzeug ein Aufsatzelement auf, welches mit dem Schneideinsatz fix verbunden ist und sich in Umfangsrichtung um den Schneideinsatz-Schaft herum erstreckt, wobei das Aufsatzelement zumindest teilweise aus einem zweiten Werkstoff ist, welcher sich von dem ersten Werkstoff unterscheidet. Ferner weist das erfindungsgemäße Werkzeug ein Befestigungsmittel zum Befestigen bzw. Festklemmen des Schneideinsatzes am Werkzeughalter auf.

Ein gattungsgemäßes Werkzeug, welches die Grundlage für den Oberbegriff der Ansprüche 1 und 15 bildet, ist aus der WO 2004/020130 A1 bekannt. Diese zeigt ein Werkzeug zur spanenden Bearbeitung, insbesondere in der Art einer Bohrstange, mit einem Halter, der an seinem einen Ende einen Festlegeschaft aufweist und am anderen Ende eine Aufnahme für einen auswechselbaren Schneidkörper mit einem Trägerteil, das zumindest teilweise im festgelegten Zustand in die Aufnahme eingreift, und mit einem Bearbeitungsteil, wobei das Trägerteil klemmend in der Aufnahme mittels eines Festlegeteils festlegbar ist und wobei die Aufnahme einen Abstützbereich aufweist, wobei die Aufnahme neben dem Abstützbereich einen Zustellbereich aufweist und wobei für einen Festlege- oder Austauschvorgang des Schneidkörpers mittels des Festlegeteils die beiden Bereiche aufeinander zu- bzw. von einander wegbewegbar sind, lässt sich über einen größeren Festlegebereich der Schneidkörper mittels eines Trägerteils in der Aufnahme sicher festlegen und insgesamt anhand dreier Flächenbereiche am Außenumfang des Trägerteils eine sichere Festlegung und Abstützung erreicht.

Weitere ähnliche Werkzeuge sind aus der DE 89 02 529 U1 bekannt und werden von der Anmelderin bereits seit Jahren unter dem Namen "Horn Supermini®" vertrieben. Dieses Werkzeugsystem bietet die Möglichkeit, je nach Anwendung Schneideinsätze verschiedenster Art im Werkzeughalter zu befestigen. Das Werkzeugsystem eignet sich sowohl zum Einstechdrehen als auch zum Außendrehen von Bohrungen sowie zum Axialeinstechdrehen und Gewindedrehen. Aufgrund der Geometrie und Größe des Schneideinsatzes sowie des Werkzeughalters eignet sich das genannten Werkzeugsystem insbesondere für die Bearbeitung von kleinen Bohrungen, bereits ab einem Durchmesser von 0,2 mm.

Das genannte Werkzeug bzw. Werkzeugsystem zeichnet sich insbesondere dadurch aus, dass der Schneideinsatz einen Einspannabschnitt aufweist, welcher in die Schneideinsatzaufnahme im Werkzeughalter einführbar ist und mittels einer Klemmschraube am Werkzeughalter festklemmbar ist. Bei der bisher bekannten Lösung wird die Klemmschraube von oben, senkrecht zur Längsachse des Halters und des Schneideinsatzes in den Werkzeughalter eingeführt. In montiertem Zustand des Werkzeugs drückt die Klemmschraube von oben direkt auf den Schneideinsatz und fixiert diesen dabei in der Schneideinsatzaufnahme des Werkzeughalters. Auf der Oberseite des Schneideinsatz-Schafts ist hierzu eine Einkerbung vorgesehen, in welche die Klemmschraube eingreift bzw. hineindrückt. Ein Lösen des Schneideinsatzes vom Werkzeughalter lässt sich auf sehr einfache Art und Weise durch Lösen der Klemmschraube bewerkstelligen, so dass ein Austausch des Schneideinsatzes relativ einfach und in kurzer Zeit von statten gehen kann.

Weitere ähnliche Werkzeuge sind aus der US 2012/148353 A1 sowie der US 2011/200402 A1 bekannt.

Im Gegensatz zu "üblichen" Drehwerkzeugen ist die im Werkzeughalter vorgesehene Schneideinsatzaufnahme bei dem Werkzeug der oben genannten Art als eine Art Sackloch bzw. topfförmige Ausnehmung ausgebildet. Der Schneideinsatz wird also nicht wie bei vielen Drehwerkzeugen zum Stechdrehen zwischen zwei aufspreizbaren Klemmfingern eingespannt, sondern in eine Ausnehmung eingesetzt und mittels der oben genannten Spannschraube am Werkzeughalter fixiert. In montiertem Zustand des Werkzeugs ist der Einspannabschnitt des Schneideinsatzes quer zu dessen Längsrichtung daher vorzugsweise vollständig entlang des gesamten Umfangs vom Werkzeughalter umgeben.

Wenngleich sich das aus der DE 89 02 529 U1 bekannte Werkzeug in der Praxis bewehrt hat, konnten im Lauf der Jahre einige Nachteile dieses Werkzeugsystems festgestellt werden. Bei der bisher bekannten Lösung erfolgt die axiale Anlage zwischen Schneideinsatz und Werkzeughalter dadurch, dass das halterseitige Ende des Schneideinsatz-Schafts an einer orthogonal zur Längsrichtung des Schneideinsatzes bzw. Werkzeughalters ausgerichteten axialen Anlagefläche am Werkzeughalter anliegt. Der Abstand zwischen der axialen Anlage und der am gegenüberliegenden Ende des Schneideinsatzes angeordneten Schneide ist daher relativ groß. Die Klemmschraube, welche orthogonal zur Längsrichtung des Schneideinsatzes bzw. Werkzeughalters auf den Schneideinsatz-Schaft drückt, trägt dazu bei, dass der Schneideinsatz während der Bearbeitung des Werkstücks auf "Knicken" beansprucht wird. Im Übrigen verdrückt die Klemmschraube den Schneideinsatz im Rahmen des Passungsspiels etwas. Da es beim Anziehen der Klemmschraube zu einer elastischen Verformung des Schneideinsatzes kommen kann, kann dies zu Abweichungen von der Spitzenhöhe führen, was sich negativ auf die Präzision des Werkzeugs auswirkt. Die im Schneideinsatz-Schaft vorgesehene Kerbe, in welche die Klemmschraube eingreift, verringert zudem die Stabilität und Festigkeit des Schneideinsatz-Schafts.

Vor diesem Hintergrund ist es eine Aufgabe der vorliegenden Erfindung, ein spanabhebendes Werkzeug der oben genannten Art bereitzustellen, welches in Bezug auf die Stabilität, die Festigkeit und Präzision des Werkzeugs verbessert ist.

Diese Aufgabe wird ausgehend von dem Werkzeug der eingangs genannten Art gemäß Anspruch 1 dadurch gelöst, dass das Aufsatzelement auf den Schneideinsatz-Schaft aufgeschrumpft oder mit diesem verlötet oder verschweißt ist.

Das Vorsehen eines extra Aufsatzelements, welches auf den Schneideinsatz-Schaft aufgesetzt ist, mit diesem fix verbunden ist und den Schneideinsatz-Schaft in Umfangsrichtung vorzugsweise vollständig umgibt, hat folgende Vorteile: Die Anlage zwischen Schneideinsatz und Werkzeughalter kann nunmehr über das Aufsatzelement erfolgen. Da dieses Aufsatzelement im Vergleich zum rückwärtigen, halterseitigen Ende des Schneideinsatz-Schafts, an dem bisher die axiale Anlage erfolgte, näher an der Schneide des Schneideinsatzes angeordnet sein kann, wird der Schneideinsatz im Vergleich zu der aus der DE 89 02 529 U1 bekannten Lösung nicht mehr so stark auf "Knicken" beansprucht. Des Weiteren ist nunmehr keine Kerbe im Schneideinsatz-Schaft vorzusehen, da das Befestigungselement am Aufsatzelement angreift. Der Schneideinsatz-Schaft selbst wird somit nicht mehr geschwächt. Bei der bisher bekannten Lösung war es ferner kaum möglich, eine exakte Passung zwischen Schneideinsatz-Schaft und der im Werkzeughalter vorgesehenen Schneideinsatzaufnahme bereitzustellen, da hier ein ausreichendes Passungsspiel vorgesehen werden musste, da sich der Schneideinsatz-Schaft ansonsten nicht in die Schneideinsatzaufnahme einführen lässt bzw. von dieser lösen lässt. Auch diese Passung lässt sich nunmehr einfacher über das Aufsatzelement gewährleisten. Im Übrigen lässt sich das Aufsatzelement und dessen Größe variable an die Größe bzw. Länge des Schneideinsatzes anpassen. Insgesamt lässt sich somit die Präzision, Stabilität und Festigkeit des Werkzeugs verbessern.

Die oben genannte Aufgabe wird ausgehend von dem Werkzeug der eingangs genannten Art ferner gemäß Anspruch 15 dadurch gelöst, dass das Aufsatzelement zumindest eine Kühlmittelbohrung aufweist, welche als Durchgangsloch ausgebildet ist.

Die Größe, Form und Ausrichtung dieser zumindest einen Kühlmittelbohrung lässt sich an die Form und Ausrichtung der Schneide anpassen. Durch die Integration der Kühlmittelbohrung in das Aufsatzelement lässt sich das Kühlmittel relativ einfach in den Bereich der Schneide leiten, ohne dass hierzu Kühlmittelbohrungen am stirnseitigen Ende des Werkzeughalters vorgesehen werden müssen, welche die Stabilität des Werkzeughalters in diesem Bereich negativ beeinflussen würden. Im Übrigen gelingt durch die Integration der Kühlmittelbohrungen in das Aufsatzelement eine platzsparende Anordnung dieser, was insbesondere in Bezug auf die geforderten, sehr kleinen Gesamtabmessungen des Werkzeugs von Vorteil ist.

Die oben genannte Aufgabe ist daher vollständig gelöst.

Das Aufsatzelement ist vorzugsweise im Wesentlichen ringförmig ausgestaltet. Unter "im Wesentlichen ringförmig" wird vorliegend eine Form verstanden, welche in seiner Gesamtheit zumindest näherungsweise der Ringform entspricht, jedoch abschnittsweise von der exakten Ringform abweichen kann. Wichtig ist für das Aufsatzelement jedoch, dass es den Schneideinsatz-Schaft in Umfangsrichtung vorzugsweise vollständig umgibt.

Das Aufsatzelement ist vorzugsweise aus Stahl. Auch der Werkzeughalter ist vorzugsweise aus Stahl gefertigt. Der Schneideinsatz ist hingegen vorzugsweise aus Hartmetall.

Gemäß einer weiteren Ausgestaltung weist das erfindungsgemäße Werkzeug, im Gegensatz zu dem aus der DE 89 02 529 U1 bekannten tropfenförmigen Querschnittsform des Schneideinsatz-Schafts sowie der Schneideinsatzaufnahme, einen kreisförmigen Querschnitt des Schneideinsatz-Schafts und der Schneideinsatzaufnahme auf. Dementsprechend hat das Aufsatzelement vorzugsweise einen im Wesentlichen kreisförmigen Querschnitt. Dieser kreisförmige Querschnitt ist wesentlich einfacher zu fertigen als der komplexer ausgestaltete, tropfenförmige Querschnitt des aus der DE 89 02 529 U1 bekannten Werkzeugs.

Gemäß einer Ausgestaltung der vorliegenden Erfindung hat die Schneideinsatzaufnahme einen vorderen Bereich zur Aufnahme des Aufsatzelements und einen hinteren Bereich zur Aufnahme des Schneideinsatz-Schafts, wobei der hintere Bereich einen größeren Abstand von dem vorderen, stirnseitigen Ende hat als der vordere Bereich, und wobei der vordere Bereich, orthogonal zur Halterlängsachse gemessen, einen größeren Durchmesser hat als der hintere Bereich.

Der vordere Bereich der Schneideinsatzaufnahme liegt also mit anderen Worten näher an dem vorderen, stirnseitigen Ende als der hintere Bereich, welcher weiter innen im Werkzeughalter liegt. Der vordere Bereich ist zudem größer ausgestaltet, da dieser das Aufsatzelement, welches radial von dem Schneideinsatz-Schaft absteht, aufnehmen muss. Der hintere Bereich der Schneideinsatzaufnahme kann im Vergleich dazu kleiner ausgestaltet sein, da dieser nur etwas größer sein muss als der Schneideinsatz-Schaft. Die Form der Schneideinsatzaufnahme entspricht somit in etwa einer Stufenbohrung mit anfänglich größerem Durchmesser und weiter innen im Werkzeughalter liegenden kleineren Durchmesser.

Vorzugsweise ist in der Schneideinsatzaufnahme zwischen dem vorderen und dem hinteren Bereich eine axiale Anlagefläche angeordnet, an dem das Aufsatzelement in montiertem Zustand des Werkzeugs anliegt. Diese axiale Anlagefläche ist quer, vorzugsweise orthogonal zu der Halterlängsachse ausgerichtet. Unter dem Begriff "quer" wird vorliegend vorzugsweise, jedoch nicht notwendigerweise orthogonal verstanden. Der Begriff "quer" soll daher als "nicht-parallel" verstanden werden und somit alle Winkel ungleich 0° umfassen.

Das Aufsatzelement weist entsprechend dazu ebenfalls eine axiale Anlagefläche auf, welche mit der in der Schneideinsatzaufnahme angeordneten axialen Anlagefläche korrespondiert. Die axiale Anlagefläche des Aufsatzelements ist quer, vorzugsweise orthogonal zu der Schneideinsatzlängsachse ausgerichtet. Bei der axialen Anlagefläche des Aufsatzelements handelt es sich vorzugsweise um eine im Wesentlichen kreisringförmige Fläche.

Im Gegensatz zu der aus der DE 89 02 529 U1 bekannten Lösung erfolgt die axiale Anlage zur Übertragung der Kräfte in axialer Richtung, also parallel zur Halterlängsachse bzw. Schneideinsatzlängsachse, über das Aufsatzelement und nicht über das rückwärtige, halterseitige Ende des Schneideinsatz-Schafts.

Gemäß einer weiteren Ausgestaltung weist das Aufsatzelement eine von der Schneideinsatzlängsachse abgewandte Außenumfangsfläche auf, welche in montiertem Zustand des Werkzeugs an einer auf die Halterlängsachse zuweisenden Innenfläche der Schneideinsatzaufnahme anliegt, die sich im vorderen Bereich der Schneideinsatzaufnahme befindet, wobei die Außenumfangsfläche des Aufsatzelements und die Innenfläche der Schneideinsatzaufnahme jeweils zumindest teilweise konisch oder zylindrisch sind. Zumindest Teile dieser Flächen liegen also auf einer konischen oder zylindrischen Mantelfläche.

Zwischen dem Aufsatzelement und dem Werkzeughalter ergibt sich somit also eine Kegel-Plan-Anlage oder eine Zylinder-Plan-Anlage. Diese dient der radialen Führung.

Gemäß einer Ausgestaltung weist das Aufsatzelement eine in Radialrichtung verlaufende Sacklochbohrung oder Ausnehmung auf, in welche das Befestigungselement eingreift.

Durch diese Sacklochbohrung oder Ausnehmung kann das Aufsatzelement und damit auch der Schneideinsatz optimal fixiert werden. Im Übrigen wird hierdurch auch eine Verdrehsicherung erreicht.

Gemäß einer weiteren Ausgestaltung weist das Aufsatzelement auf einer der Sacklochbohrung oder Ausnehmung gegenüberliegenden Seite eine Nut auf, welche parallel zu der Schneideinsatzlängsachse verläuft. Zusätzlich weist das Werkzeug gemäß dieser Ausgestaltung vorzugsweise ein Justierelement auf, welches zum Justieren des Schneideinsatzes in die Nut eingreift. Die Nut hat vorzugsweise einen V-förmigen Querschnitt. Bei dem Justierelement handelt es sich vorzugsweise um einen Klemmschraube mit konischer Spitze, wobei unter "konischer Spitze" sowohl eine kegelförmige als auch eine kegelstumpfförmige Spitze zu verstehen ist.

Die V-förmige Nut dient zum einen der Positionierung, damit der Schneideinsatz nur in einer einzigen Position im Werkzeughalter verbaut werden kann. Die als Justierelement dienende Klemmschraube sichert den Schneideinsatz in dieser Position. Die konische Spitze der Klemmschraube korrespondiert mit der V-förmigen Nut, welche am Schneideinsatz-Schaft vorgesehen ist. Dieser aus V-Nut und konischer Klemmschraube bestehender Mechanismus dient weiterhin zur Feineinstellung der Spitzenhöhe der Schneide des Schneideinsatzes. Die Spitzenhöhe der Schneide des Schneideinsatzes lässt sich daher also mit Hilfe der Klemmschraube fein justieren. Diese Möglichkeit der Feineinstellung der Spitzenhöhe ist insbesondere deshalb von Vorteil, da es beim Anzug des Befestigungselements zur Befestigung des Schneideinsatzes am Werkzeughalter zu kleineren elastischen Verformungen im Schneideinsatz-Schaft kommen kann. Diese lassen sich somit nun ausgleichen, was bei vergleichbaren Systemen nicht der Fall ist.

Die V-förmige Nut ist an dem Aufsatzelement gegenüber der Sacklochbohrung oder Ausnehmung angeordnet, in welche das Befestigungselement zum Befestigen des Schneideinsatzes am Werkzeughalter eingreift. Bei diesem Befestigungselement handelt es sich vorzugsweise ebenso um eine Klemmschraube mit konischer Spitze. Sie drückt im Vergleich zu dem Justierelement auf der gegenüberliegenden Seite auf das Aufsatzelement. Die am Aufsatzelement vorgesehene Sacklochbohrung oder Ausnehmung ist in ihrem Grund vorzugsweise ebenfalls konisch geformt, so dass diese mit der als Befestigungselement dienenden Klemmschraube korrespondiert. Beim Anzug der Klemmschraube wird der Schneideinsatz somit bis zum axialen Anschlag in den Werkzeughalter hineingezogen. Zudem wird der Schneideinsatz dadurch nochmals gegen Verdrehen gesichert.

Gemäß einer weiteren Ausgestaltung weist der Werkzeughalter eine erste Halter-Bohrung mit einem ersten Gewinde auf, welches mit der als Befestigungselement dienenden Klemmschraube korrespondiert. Zudem weist der Werkzeughalter gemäß dieser Ausgestaltung auch eine zweite Halter-Bohrung mit einem zweiten Gewinde auf, welches mit der als Justierelement dienenden Klemmschraube korrespondiert. Die erste und die zweite Halter-Bohrung sind jeweils in Radialrichtung, also orthogonal zu der Halterlängsachse ausgerichtet und als Durchgangsbohrung ausgebildet.

Die Mittelachsen der beiden Halter-Bohrungen verlaufen vorzugsweise parallel zueinander und sind zur weiteren Steigerung der Stabilität entlang der Halterlängsachse zueinander versetzt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele sind in den Zeichnungen dargestellt und werden in der nachfolgenden Beschreibung näher erläutert. Es zeigen:
- Fig. 1: eine perspektivische Ansicht eines Ausführungsbeispiels des erfindungsgemäßen Werkzeugs;
- Fig. 2: eine Explosionsdarstellung des in Fig. 1 gezeigten Ausführungsbeispiels des erfindungsgemäßen Werkzeugs;
- Fig. 3: ein Längsschnitt des in Fig. 1 gezeigten Ausführungsbeispiels des erfindungsgemäßen Werkzeugs;
- Fig. 4: ein Querschnitt des in Fig. 1 gezeigten Ausführungsbeispiels des erfindungsgemäßem Werkzeugs; und
- Fig. 5A-5C: eine perspektivische Ansicht sowie zwei Seitenansichten eines Schneideinsatzes inklusive Aufsetzelement, welches in dem erfindungsgemäßen Werkzeug zum Einsatz kommen kann.

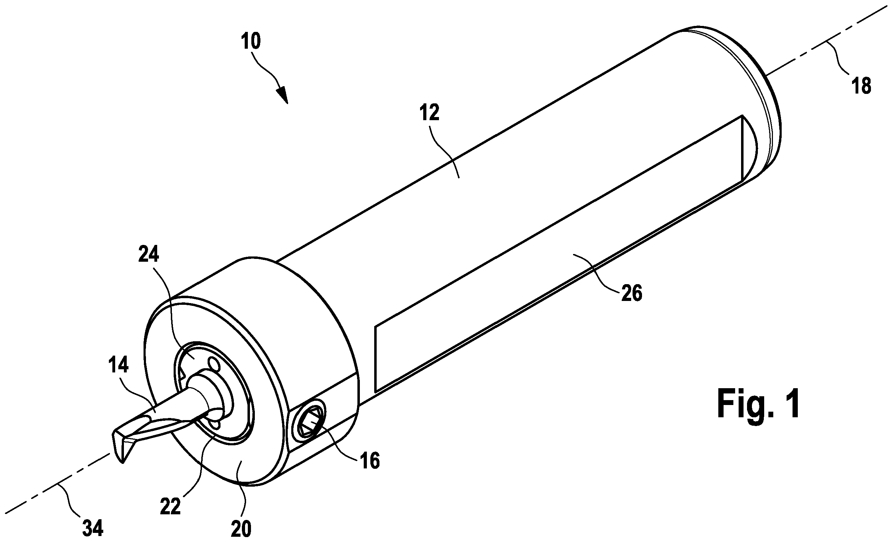

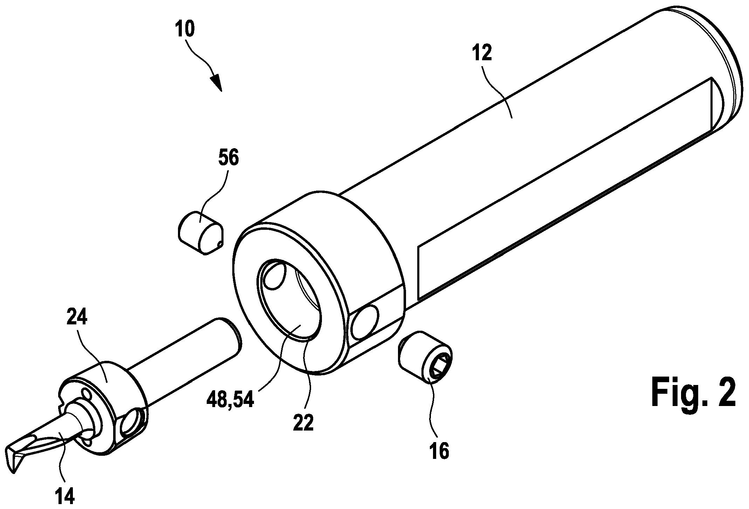

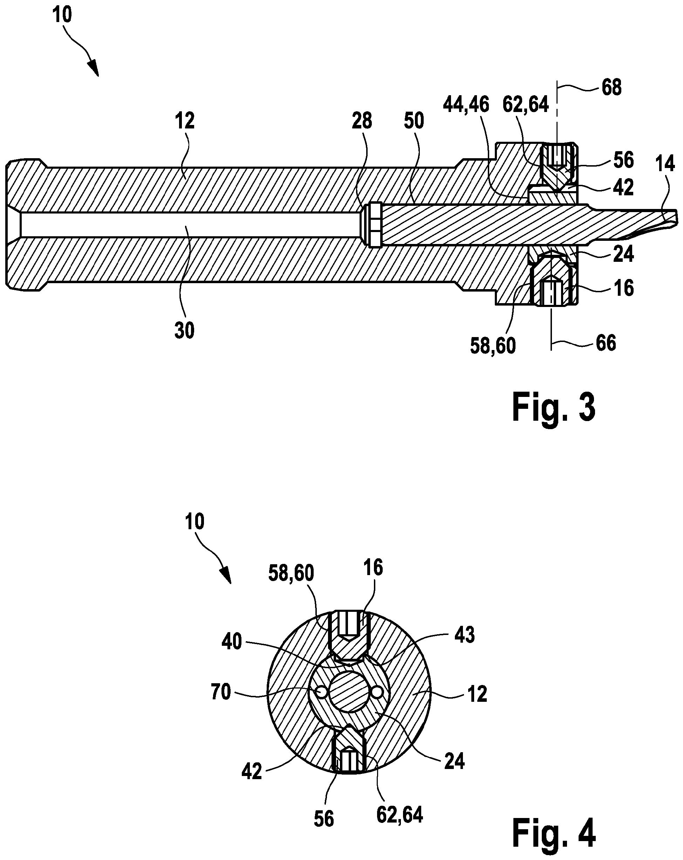

Die Fig. 1-4 zeigen ein Ausführungsbeispiel des erfindungsgemäßen Werkzeugs in einer perspektivischen Ansicht (Fig. 1), einer Explosionsdarstellung (Fig. 2), in einem Längsschnitt (Fig. 3) und einem Querschnitt (Fig. 4). Das erfindungsgemäße Werkzeug ist darin in seiner Gesamtheit mit der Bezugsziffer 10 bezeichnet. Die Fig. 1, 3 und 4 zeigen das Werkzeug 10 in seinem montierten Zustand.

Das Werkzeug 10 weist einen Werkzeughalter 12 und einen austauschbaren Schneideinsatz 14 auf, welcher u.a. mit Hilfe eines Befestigungsmittels 16 am Werkzeughalter 12 befestigbar ist.

Der Werkzeughalter 12 ist vorzugsweise aus Stahl. Der Schneideinsatz 14 ist dagegen vorzugsweise aus Hartmetall.

Der Werkzeughalter 12 erstreckt sich im Wesentlichen entlang einer Halterlängsachse 18 und weist an einem stirnseitigen Ende 20 eine Schneideinsatzaufnahme 22 auf. Wenngleich diese Aufnahme 22 der Einfachheit halber vorliegend als "Schneideinsatzaufnahme" bezeichnet wird, dient diese erfindungsgemäß nicht nur zur Aufnahme des Schneideinsatzes 14, sondern auch zur Aufnahme eines Aufsatzelements 24, welches auf den Schneideinsatz 14 aufgesetzt ist und mit diesem fix verbunden ist. In seinem hinteren Bereich weist der Werkzeughalter 12 einen Halter-Schaft 26 mit einem Einspannabschnitt auf, mit Hilfe dessen sich der Werkzeughalter 12 an einer Werkzeugmaschine befestigen lässt.

Die Schneideinsatzaufnahme 22 ist in Form einer topfförmigen Ausnehmung in den Werkzeughalter 12 eingebracht. Diese topfförmige Ausnehmung bildet eine Art Sackloch oder Stufenbohrung im Werkzeughalter 12. Der Begriff "topfförmige Ausnehmung" wird vorliegend dazu verwendet, um klarzustellen, dass es sich bei der die Schneideinsatzaufnahme 22 bildenden Ausnehmung um eine Aushöhlung im Werkzeughalter 12 handelt, welche eine in Bezug auf die Halterlängsachse 18 umlaufende, geschlossene Umfangswand aufweist und zur Stirnseite 20 des Werkzeughalters 12 hin offen ist.

Die topfförmige Ausnehmung ist mit anderen Worten in den Werkzeughalter 12 eingebracht und wird ringsherum um die Halterlängsachse 18 vom Werkzeughalter 12 umgeben. Der Begriff "topfförmige Ausnehmung" soll jedoch nicht auf eine spezielle Querschnittsform beschränkt sein. Der Querschnitt dieser Ausnehmung kann durchaus komplex geformt sein und muss nicht, wie vorliegend der Fall, kreisförmig sein. Die als Schneideinsatzaufnahme 22 dienende topfförmige Ausnehmung besitzt zwar im Inneren des Werkzeughalters 12 einen Grund 28 (siehe Fig. 3). Dieser Grund 28 muss jedoch keine geschlossene Wandung sein. Wie aus dem Längsschnitt in Fig. 3 ersichtlich ist, kann sich auch eine Bohrung 30 an den Grund der Schneideinsatzaufnahme 22 anschließen, welche beispielsweise für die Kühlmittelzufuhr verwendet wird.

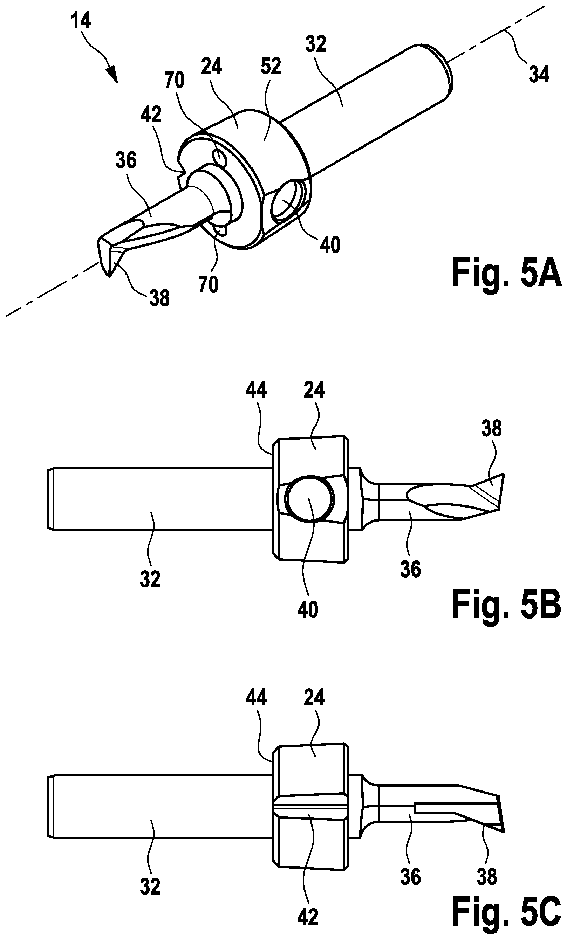

Der Schneideinsatz 14, welcher separat in den Fig. 5A-5C gezeigt ist, besitzt einen Schaft 32, welcher sich im Wesentlichen entlang einer Schneideinsatzlängsachse 34 erstreckt, die in montiertem Zustand des Werkzeugs 10 mit der Halterlängsachse 18 zusammenfällt. Im vorderen Bereich des Schneideinsatzes befindet sich ein geschliffener Schneideinsatz-Kopf 36, welcher zumindest eine Schneide 38 aufweist. Der Schneideinsatz-Kopf 36 ist vorzugsweise einstückig mit dem Schneideinsatz-Schaft 32 verbunden. Im vorliegenden Ausführungsbeispiel ist dieser Schneideinsatzkopf 36 im Wesentlichen hakenförmig, wobei die Schneide 38 an einem abgebogenen Ende des Schneideinsatz-Kopfs angeordnet ist. Es versteht sich jedoch, dass je nach Bedarf und Anwendung auch andere Formen des Schneideinsatz-Kopfs 36 und der daran angeordneten Schneide 38 möglich sind, ohne den Rahmen der vorliegenden Erfindung zu verlassen.

Das Aufsatzelement 24 ist auf den Schaft 32 des Schneideinsatzes 14 aufgesetzt und mit diesem fix verbunden. Es ist vorzugsweise als eine Art Ring ausgestaltet, welcher über den Schaft 32 übergestülpt ist und diesen in Umfangsrichtung vorzugsweise vollständig umgibt. Das Aufsatzelement 24 ist vorzugsweise aus Stahl. Das Aufsatzelement 24 ist gemäß dem Erfindung entweder auf den Schneideinsatz-Schaft 32 aufgeschrumpft oder mit dem Schneideinsatz-Schaft 32 verschweißt oder verlötet. In dem vorliegend gezeigten Ausführungsbeispiel weist das Aufsatzelement 24 einen im Wesentlichen kreisringförmigen Querschnitt auf, wobei insbesondere Teile der Außenseite des Aufsatzelements 24 von der exakten Kreisring-Form abweichen, weshalb die Form des Aufsatzelements vorliegend als "im Wesentlichen kreisringförmig" beschrieben wird.

Das Aufsatzelement 24 weist eine Sacklochbohrung 40 auf. In diese Sacklochbohrung 40 greift das Befestigungselement 16 ein, um das Aufsatzelement 24 mit dem damit fix verbundenen Schneideinsatz 14 am Werkzeughalter 12 zu fixieren. Anstelle einer Sacklochbohrung 40 kann hier auch eine wie auch immer geformte Ausnehmung angeordnet sein.

Auf einer der Sacklochbohrung 40 gegenüber liegenden Seite weist das Aufsatzelement 24 eine Nut 42 auf. Diese Nut 42 verläuft parallel zu der Schneideinsatzlängsachse 34. Die Nut 42 besitzt vorzugsweise einen V-förmigen Querschnitt.

Das Aufsatzelement 24 dient erfindungsgemäß als eine Art Verbindungsstück zwischen dem Schneideinsatz 14 und dem Werkzeughalter 12. Das Befestigungselement 16 greift in montiertem Zustand des Werkzeugs 10 in die an Aufsatzelement 24 vorgesehene Sacklochbohrung 40 ein. Hierdurch wird das Aufsatzelement 24 samt des damit fix verbundenen Schneideinsatzes 14 am Halter 12 festgeklemmt. Das Befestigungselement 16 ist vorzugsweise als Klemmschraube ausgestaltet. Besonders bevorzugt handelt es sich bei dieser Klemmschraube um eine Madenschraube mit konischer Spitze 44 (siehe Fig. 4). Beim Anziehen der Klemmschraube 16 wird der Schneideinsatz 14 somit in den Halter 12 hineingezogen, und zwar bis zu der Stelle, an dem das Aufsatzelement 24 im Inneren des Werkzeughalters 12 anschlägt.

In montiertem Zustand des Werkzeugs 10 liegt das Aufsatzelement 24 mit einer axialen Anlagefläche 44, welche quer, vorzugsweise orthogonal zu der Schneideinsatzlängsachse 34 verläuft (siehe Fig. 5B und 5C) an einer entsprechenden axialen Anlagefläche 46 des Werkzeughalters 12 an, welche quer, vorzugsweise orthogonal zu der Halterlängsachse 18 verläuft (siehe Fig. 3). Bei der am Aufsatzelement 24 angeordneten axialen Anlagefläche 44 wie auch bei der in der Schneideinsatzaufnahme 22 angeordneten, korrespondierenden axialen Anlagefläche 46 handelt es sich jeweils um eine kreisringförmige Fläche.

Die axiale Anlagefläche 46 des Werkzeughalters 12 ist in der Schneideinsatzaufnahme 22 zwischen einem vorderen Bereich 48 (siehe Fig. 2) und einem hinteren Bereich 50 (siehe Fig. 3) angeordnet. Der vordere Bereich 48 der Schneideinsatzaufnahme 22 hat im Vergleich zu dem hinteren Bereich 50 der Schneideinsatzaufnahme 22 einen orthogonal zur Halterlängsachse 18 gemessenen, größeren Durchmesser. Der vordere Bereich 48 dient zur Aufnahme des Aufsatzelements 24. Der hintere Bereich 50 dient dagegen zur Aufnahme des Schneideinsatz-Schafts 32. Der Durchmesser des vorderen Bereichs 48 entspricht vorzugsweise im Wesentlichen dem Durchmesser des Aufsatzelements 24, wobei der Durchmesser des Aufsatzelements 24 etwas kleiner ist, damit das Aufsatzelement 24 in den vorderen Bereich 48 einführbar ist. Ebenso entspricht der Durchmesser des hinteren Bereichs 50 in etwa dem Durchmesser des Schneideinsatz-Schafts 32, wobei auch hier der Durchmesser des Schneideinsatz-Schafts 32 etwas kleiner ist, damit dieser in den hinteren Bereich 50 einführbar ist.

Die radiale Führung erfolgt ebenfalls zumindest teilweise über das Aufsatzelement 24. Primär erfolgt die radiale Führung jedoch über den Schaft 32 des Schneideinsatzes 14 durch Zusammenwirken mit der Innenfläche im hinteren Bereich 50 der Schneideinsatzaufnahme 22. Das Aufsatzelement 24 dient hauptsächlich zur axialen Führung.

Das Aufsatzelement 24 weist eine von der Schneideinsatzlängsachse 34 abgewandte Außenumfangsfläche 52 auf (siehe Fig. 5A), welche in montiertem Zustand des Werkzeugs an einer auf die Halterlängsachse 18 zuweisenden Innenfläche des Werkzeughalters 12 anliegt, welche sich im vorderen Bereich 48 der Schneideinsatzaufnahme 22 befindet. Sowohl bei der Außenumfangsfläche 52 als auch bei der Innenfläche 54 handelt es sich vorzugsweise um eine konische oder zylindrische Fläche.

Wie ferner aus den Fig. 2-4 ersichtlich ist, weist das Werkzeug 10 vorzugsweise noch eine weitere Klemmschraube 56 auf, welche in dem vorliegenden Ausführungsbeispiel ebenfalls als Madenschraube mit konischer Spitze ausgestaltet ist. Diese Klemmschraube 56 wird vorliegend allgemein als "Justierelement" bezeichnet. Das Justierelement 56 greift zum Justieren des Schneideinsatzes 14 in die am Aufsatzelement 24 vorgesehene V-förmige Nut 42 ein. Die V-Nut 42 dient zum einen der Positionierung des Schneideinsatzes 14 im Werkzeughalter 12, so dass der Schneideinsatz 12 samt Aufsatzelement 24 nur in einer einzigen Position im Werkzeughalter 12 befestigt werden kann. Das Zusammenwirken zwischen Justierelement 56 und V-Nut 42 dient der Feineinstellung der Spitzenhöhe des Schneideinsatzes 14 bzw. der Schneide 38. Da es beim Anziehen der Klemmschraube 16 zu kleineren Verformungen im Aufsatzelement 24 oder innerhalb des Schneideinsatzes 14 kommen kann, ist es von Vorteil, diese mit Hilfe des Justierelements 56 ausgleichen zu können. Es versteht sich, dass auch dieses Justierelement 56 zur Klemmung des Schneideinsatzes 14 am Werkzeughalter 12 beiträgt, und damit auch zur radialen Führung des Schneideinsatzes 14.

Wie insbesondere aus Fig. 4 ersichtlich ist, wird die als Befestigungselement 16 dienende Klemmschraube in eine erste Halter-Bohrung 58 eingeschraubt, welche ein erstes Gewinde 60 aufweist. Die als Justierelement 56 dienende Klemmschraube wir in eine zweite Halterbohrung 62 eingeschraubt, welche ein zweites Gewinde 64 aufweist. Beide Halter-Bohrungen 58, 62 verlaufen vorzugsweise orthogonal zu der Halterlängsachse 18 und parallel zueinander. Beide Halter-Bohrungen 58, 62 sind als Durchgangsbohrungen ausgebildet. Die erste Halter-Bohrung 58 erstreckt sich entlang einer ersten Mittelachse 66. Die zweite Halter-Bohrung 62 erstreckt sich entlang einer zweiten Mittelachse 68. Diese beiden Mittelachsen sind parallel zueinander, allerdings entlang der Halterlängsachse 18 zueinander versetzt.

In dem Aufsatzelement 24 können ferner noch eine oder mehrere Kühlmittelbohrungen 70 vorgesehen sein (siehe Fig. 4 und 5A). Diese verlaufen vorzugsweise parallel zur Schneideinsatzlängsachse 24 und sind als Durchgangsloch ausgebildet.

Insgesamt ist die Konstruktion des erfindungsgemäßen Werkzeugs 10 aus folgenden Gründen von Vorteil: Aufgrund des auf den Schneideinsatz-Schaft 32 aufgesetzten Aufsatzelements 24 lässt sich die axiale Anlage 44, 46 vergleichsweise relativ weit vorne am Schneideinsatz 14 realisieren. Bei bisher bekannten Werkzeugen dieser Art erfolgt die axiale Anlage stattdessen relativ weit hinten, nämlich normalerweise am hinteren, stirnseitigen Ende des Schneideinsatz-Schafts 32. Das erfindungsgemäße Werkzeug wird daher vergleichsweise wenig auf "Knicken" beansprucht.

Des Weiteren muss keine Ausnehmung in den Schneideinsatz-Schaft 32 eingeformt sein, da die Ausnehmung bzw. Sacklochbohrung 40, in welche das Befestigungselement 16 eingreift, vorliegend am Aufsatzelement 24 angeordnet ist.

Ein weiterer Vorteil ergibt sich durch die Möglichkeit der Feineinstellung der Spitzenhöhe mit Hilfe des Justierelements 56. Durch diese Feinjustierung können elastische Verformungen, welche beim Anziehen des Befestigungselements 16 auftreten können, ausgeglichen werden.

Die platzsparende Integration der Kühlmittelbohrungen 70 in das Aufsatzelement 24 ist als weiterer Vorteil zu werten. Im Übrigen ist die Herstellung des Schneideinsatzes 14 mit darauf aufgeschrumpftem Aufsatzelement 24 relativ kostengünstig. Form und Größe des Aufsatzelements können individuell an die Gegebenheiten, beispielsweise an die Form und Größe des Schneideinsatzes 14, angepasst werden.

## Patentansprüche

1. Werkzeug (10) zur spanenden Bearbeitung eines Werkstücks, mit:
- einem Schneideinsatz (14) mit einem Schaft (32), welcher sich entlang einer Schneideinsatzlängsachse (34) erstreckt, und mit zumindest einer Schneide (38), wobei der Schneideinsatz (14) zumindest teilweise aus einem ersten Werkstoff ist;
- einem Werkzeughalter (12), welcher sich entlang einer Halterlängsachse (18) erstreckt und an einem stirnseitigen Ende (20) zur Aufnahme des Schneideinsatz-Schafts (32) eine Schneideinsatzaufnahme (22) aufweist, welche als topfförmige Ausnehmung im Werkzeughalter (12) ausgestaltet ist, **dadurch gekennzeichnet, dass** das Werkzeug
- ein Aufsatzelement (24) enthält, welches mit dem Schneideinsatz (14) fix verbunden ist und sich in Umfangsrichtung um den Schneideinsatz-Schaft (32) herum erstreckt, wobei das Aufsatzelement (24) zumindest teilweise aus einem zweiten Werkstoff ist, welcher sich von dem ersten Werkstoff unterscheidet; und dass das Werkzeug
- ein Befestigungselement (16) zum Befestigen des Schneideinsatzes (14) am Werkzeughalter (12) enthält, wobei das Befestigungselement (16) in montiertem Zustand des Werkzeugs (10) das Aufsatzelement (24) kontaktiert, um den Schneideinsatz (14) am Werkzeughalter (12) zu befestigen, wobei das Aufsatzelement (24) auf den Schneideinsatz-Schaft (32) aufgeschrumpft oder mit diesem verlötet oder verschweißt ist.

2. Werkzeug gemäß Anspruch 1, wobei der Schneideinsatz-Schaft (32) und die Schneideinsatzaufnahme (22) jeweils einen kreisförmigen Querschnitt haben und das Aufsatzelement (24) einen zumindest abschnittsweise kreisringförmigen Querschnitt hat.

3. Werkzeug gemäß Anspruch 1 oder 2, wobei der erste Werkstoff Hartmetall und der zweite Werkstoff Stahl ist.

4. Werkzeug gemäß einem der Ansprüche 1 bis 3, wobei die Schneideinsatzaufnahme (22) einen vorderen Bereich (48) zur Aufnahme des Aufsatzelements (24) und einen hinteren Bereich (50) zur Aufnahme des Schneideinsatz-Schafts (32) hat, wobei der hintere Bereich einen größeren Abstand von dem stirnseitigen Ende (20) hat als der vordere Bereich (48), und wobei der vordere Bereich (48), orthogonal zur Halterlängsachse (18) gemessen, einen größeren Durchmesser hat als der hintere Bereich (50).

5. Werkzeug gemäß Anspruch 4, wobei in der Schneideinsatzaufnahme (22) zwischen dem vorderen und dem hinteren Bereich (48, 50) eine axiale Anlagefläche (46) angeordnet ist, an dem das Aufsatzelement (24) in montiertem Zustand des Werkzeugs (10) anliegt, wobei die axiale Anlagefläche (46) orthogonal zu der Halterlängsachse (18) ausgerichtet ist.

6. Werkzeug gemäß Anspruch 4 oder 5, wobei das Aufsatzelement (24) eine von der Schneideinsatzlängsachse (18) abgewandte Außenumfangsfläche (52) aufweist, welche in montiertem Zustand des Werkzeugs (10) an einer auf die Halterlängsachse (18) zuweisenden Innenfläche (54) der Schneideinsatzaufnahme (22) anliegt, die sich im vorderen Bereich (48) der Schneideinsatzaufnahme (22) befindet, wobei die Außenumfangsfläche (52) des Aufsatzelements (24) und die Innenfläche (54) der Schneideinsatzaufnahme (22) jeweils zumindest teilweise konisch oder zylindrisch sind.

7. Werkzeug gemäß einem der Ansprüche 1 bis 6, wobei das Aufsatzelement (24) eine in Radialrichtung verlaufende Sacklochbohrung oder Ausnehmung (40) aufweist.

8. Werkzeug gemäß Anspruch 7, wobei das Aufsatzelement (24) auf einer der Sacklochbohrung oder Ausnehmung (40) gegenüberliegenden Seite eine Nut (42) aufweist, welche parallel zu der Schneideinsatzlängsachse (34) verläuft.

9. Werkzeug gemäß Anspruch 8, wobei das Werkzeug (10) ferner ein Justierelement (56) aufweist, welches zum Justieren des Schneideinsatzes (14) in die Nut (42) eingreift.

10. Werkzeug gemäß Anspruch 9, wobei die Nut (42) einen V-förmigen Querschnitt hat und das Justierelement (56) eine Klemmschraube mit konischer Spitze ist.

11. Werkzeug gemäß einem der Ansprüche 1 bis 10, wobei das Befestigungselement (16) eine Klemmschraube mit konischer Spitze ist.

12. Werkzeug gemäß den Ansprüchen 9, 10 und 11, wobei der Werkzeughalter (12) eine erste Halter-Bohrung (58) mit einem ersten Gewinde (60) aufweist, welches mit der als Befestigungselement (16) dienenden Klemmschraube korrespondiert, und wobei der Werkzeughalter (12) eine zweite Halter-Bohrung (62) mit einem zweiten Gewinde (64) aufweist, welches mit der als Justierelement (56) dienenden Klemmschraube korrespondiert, wobei die erste und die zweite Halter-Bohrung (58, 62) jeweils in Radialrichtung orthogonal zu der Halterlängsachse (18) verlaufen und als Durchgangsbohrungen ausgebildet sind.

13. Werkzeug gemäß Anspruch 12, wobei die erste Halter-Bohrung (58) eine erste Mittelachse (66) aufweist und die zweite Halter-Bohrung (62) eine zweite Mittelachse (68) aufweist, wobei die erste und die zweite Mittelachse (66, 68) parallel zueinander verlaufen und entlang der Halterlängsachse (18) zueinander versetzt sind.

14. Werkzeug gemäß einem der Ansprüche 1 bis 13, wobei das Aufsatzelement (24) zumindest eine Kühlmittelbohrung (70) aufweist, welche als Durchgangsloch ausgebildet ist.

15. Werkzeug (10) zur spanenden Bearbeitung eines Werkstücks, mit:
- einem Schneideinsatz (14) mit einem Schaft (32), welcher sich entlang einer Schneideinsatzlängsachse (34) erstreckt, und mit zumindest einer Schneide (38), wobei der Schneideinsatz (14) zumindest teilweise aus einem ersten Werkstoff ist;
- einem Werkzeughalter (12), welcher sich entlang einer Halterlängsachse (18) erstreckt und an einem stirnseitigen Ende (20) zur Aufnahme des Schneideinsatz-Schafts (32) eine Schneideinsatzaufnahme (22) aufweist, welche als topfförmige Ausnehmung im Werkzeughalter (12) ausgestaltet ist, **dadurch gekennzeichnet, dass** das Werkzeug
- ein Aufsatzelement (24) enthält, welches mit dem Schneideinsatz (14) fix verbunden ist und sich in Umfangsrichtung um den Schneideinsatz-Schaft (32) herum erstreckt, wobei das Aufsatzelement (24) zumindest teilweise aus einem zweiten Werkstoff ist, welcher sich von dem ersten Werkstoff unterscheidet; und dass das Werkzeug
- ein Befestigungselement (16) zum Befestigen des Schneideinsatzes (14) am Werkzeughalter (12) enthält, wobei das Befestigungselement (16) in montiertem Zustand des Werkzeugs (10) das Aufsatzelement (24) kontaktiert, um den Schneideinsatz (14) am Werkzeughalter (12) zu befestigen, wobei das Aufsatzelement (24) zumindest eine Kühlmittelbohrung (70) aufweist, welche als Durchgangsloch ausgebildet ist.

## Claims

1. A tool (10) for machining a workpiece, comprising:
- a cutting insert (14) with a shank (32), which extends along a cutting insert longitudinal axis (34), and with at least one cutting edge (38), wherein at least a part of the cutting insert (14) is made of a first material;
- a tool holder (12) which extends along a holder longitudinal axis (18) and comprises on an end-face end (20) a cutting insert receptacle (22) for receiving the cutting insert shank (32), wherein the cutting insert receptacle (22) is designed as a cup-shaped recess in the tool holder (12); **characterized in that** the tool comprises
- an attachment element (24) which is fixedly connected to the cutting insert (14) and extends in a circumferential direction around the cutting insert shank (32), wherein at least a part of the attachment element (24) is made of a second material which differs from the first material; and **in that** the tool comprises
- a fastening element (16) for fastening the cutting insert (14) on the tool holder (12), wherein, in a mounted state of the tool (10), the fastening element (16) contacts the attachment element (24) in order to fasten the cutting insert (14) on the tool holder (12),
wherein the attachment element (24) is shrunk onto the cutting insert shank (32) or is soldered or welded to said cutting insert shank (32).

2. The tool as claimed in claim 1, wherein each of the cutting insert shank (32) and the cutting insert receptacle (22) has a circular cross section and the attachment element (24) has a cross section at least a portion of which is circular ring-shaped.

3. The tool as claimed in claim 1 or 2, wherein the first material is hard metal and the second material is steel.

4. The tool as claimed in one of claims 1 to 3, wherein the cutting insert receptacle (22) has a front region (48) for receiving the attachment element (24) and a rear region (50) for receiving the cutting insert shank (32), wherein the rear region is arranged at a greater distance from the end-face end (20) than the front region (48), and wherein the front region (48), when measured orthogonally with respect to the holder longitudinal axis (18), has a greater diameter than the rear region (50).

5. The tool as claimed in claim 4, wherein an axial contact surface (46), against which the attachment element (24) abuts in the mounted state of the tool (10), is arranged in the cutting insert receptacle (22) between the front region (48) and the rear region (50), wherein the axial contact surface (46) is aligned orthogonally with respect to the holder longitudinal axis (18).

6. The tool as claimed in claim 4 or 5, wherein the attachment element (24) comprises an outside circumferential surface (52) which is remote from the cutting insert longitudinal axis (18) and, in the mounted state of the tool (10), abuts against an inside surface (54) of the cutting insert receptacle (22), which points to the holder longitudinal axis (18) and is situated in the front region (48) of the cutting insert receptacle (22), wherein each of the outside circumferential surface (52) of the attachment element (24) and the inside surface (54) of the cutting insert receptacle (22) is at least partially conical or cylindrical.

7. The tool as claimed in one of claims 1 to 6, wherein the attachment element (24) comprises a blind hole or recess (40) which extends in a radial direction.

8. The tool as claimed in claim 7, wherein the attachment element (24) comprises a groove (42), which is arranged on a side opposite the blind hole or recess (40) and extends parallel to the cutting insert longitudinal axis (34).

9. The tool as claimed in claim 8, wherein the tool (10) comprises an adjusting element (56) which engages in the groove (42) for adjusting the cutting insert (14).

10. The tool as claimed in claim 9, wherein the groove (42) has a V-shaped cross section and the adjusting element (56) is a clamping screw with a conical tip.

11. The tool as claimed in one of claims 1 to 10, wherein the fastening element (16) is a clamping screw with a conical tip.

12. The tool as claimed in claims 9, 10 and 11, wherein the tool holder (12) comprises a first holder bore (58) with a first thread (60) which corresponds with the clamping screw which serves as the fastening element (16), and wherein the tool holder (12) comprises a second holder bore (62) with a second thread (64) which corresponds with the clamping screw which serves as the adjusting element (56), wherein each of the first and the second holder bores (58, 62) extends orthogonally with respect to the holder longitudinal axis (18) in a radial direction and is realized as a through-bore.

13. The tool as claimed in claim 12, wherein the first holder bore (58) comprises a first center axis (66) and the second holder bore (62) comprises a second center axis (68), wherein the first and the second center axes (66, 68) extend parallel to one another and are offset with respect to one another along the holder longitudinal axis (18).

14. The tool as claimed in one of claims 1 to 13, wherein the attachment element (24) comprises at least one coolant bore (70) which is realized as a through hole.

15. A tool (10) for machining a workpiece, comprising:
- a cutting insert (14) with a shank (32), which extends along a cutting insert longitudinal axis (34), and with at least one cutting edge (38), wherein at least a part of the cutting insert (14) is made of a first material;
- a tool holder (12) which extends along a holder longitudinal axis (18) and comprises on an end-face end (20) a cutting insert receptacle (22) for receiving the cutting insert shank (32), wherein the cutting insert receptacle (22) is designed as a cup-shaped recess in the tool holder (12); **characterized in that** the tool comprises
- an attachment element (24) which is fixedly connected to the cutting insert (14) and extends in a circumferential direction around the cutting insert shank (32), wherein at least a part of the attachment element (24) is made of a second material which differs from the first material; and **in that** the tool comprises
- a fastening element (16) for fastening the cutting insert (14) on the tool holder (12), wherein, in a mounted state of the tool (10), the fastening element (16) contacts the attachment element (24) in order to fasten the cutting insert (14) on the tool holder (12),
wherein the attachment element (24) comprises at least one coolant bore (70) which is realized as a through hole.

## Revendications

1. Outil (10) pour l'usinage par enlèvement de copeaux d'une pièce, comprenant :
- une plaquette de coupe (14) avec une tige (32) qui s'étend le long d'un axe longitudinal de plaquette de coupe (34), et avec au moins une arête de coupe (38), la plaquette de coupe (14) étant au moins en partie constituée d'un premier matériau ;
- un porte-outil (12) qui s'étend le long d'un axe longitudinal de porte-outil (18) et qui présente au niveau d'une extrémité frontale (20), pour recevoir la tige de plaquette de coupe (32), un logement de plaquette de coupe (22) qui est réalisé sous forme d'évidement en forme de pot dans le porte-outil (12),
**caractérisé en ce que** l'outil
- contient un élément d'embout (24) qui est connecté fixement à la plaquette de coupe (14) et qui s'étend dans la direction périphérique autour de la tige de plaquette de coupe (32), l'élément d'embout (24) étant constitué au moins en partie d'un deuxième matériau qui est différent du premier matériau ; et **en ce que** l'outil
- contient un élément de fixation (16) pour la fixation de la plaquette de coupe (14) au porte-outil (12), l'élément de fixation (16), dans l'état monté de l'outil (10), venant en contact avec l'élément d'embout (24) afin de fixer la plaquette de coupe (14) au porte-outil (12),
l'élément d'embout (24) étant emmanché par frettage sur la tige de plaquette de coupe (32) ou étant brasé ou soudé à celle-ci.

2. Outil selon la revendication 1, dans lequel la tige de plaquette de coupe (32) et le logement de plaquette de coupe (22) présentent chacun une section transversale circulaire et l'élément d'embout (24) présente une section transversale au moins en partie annulaire circulaire.

3. Outil selon la revendication 1 ou 2, dans lequel le premier matériau est un métal dur et le deuxième matériau est de l'acier.

4. Outil selon l'une quelconque des revendications 1 à 3, dans lequel le logement de plaquette de coupe (22) présente une région avant (48) pour recevoir l'élément d'embout (24) et une région arrière (50) pour recevoir la tige de plaquette de coupe (32), la région arrière étant plus éloignée de l'extrémité frontale (20) que la région avant (48), et la région avant (48), mesuré perpendiculairement à l'axe longitudinal de porte-outil (18), présentant un plus grand diamètre que la région arrière (50).

5. Outil selon la revendication 4, dans lequel une surface d'appui axiale (46) est disposée dans le logement de plaquette de coupe (22) entre la région avant et la région arrière (48, 50), sur laquelle surface d'appui axiale s'applique l'élément d'embout (24) dans l'état monté de l'outil (10), la surface d'appui axiale (46) étant orientée perpendiculairement à l'axe longitudinal de porte-outil (18).

6. Outil selon la revendication 4 ou 5, dans lequel l'élément d'embout (24) présente une surface périphérique extérieure (52) opposée à l'axe longitudinal de plaquette de coupe (18), qui s'applique dans l'état monté de l'outil (10) contre une surface intérieure (54) du logement de plaquette de coupe (22) tournée vers l'axe longitudinal de porte-outil (18), laquelle se trouve dans la région avant (48) du logement de plaquette de coupe (22), la surface périphérique extérieure (52) de l'élément d'embout (24) et la surface intérieure (54) du logement de plaquette de coupe (22) étant à chaque fois au moins en partie coniques ou cylindriques.

7. Outil selon l'une quelconque des revendications 1 à 6, dans lequel l'élément d'embout (24) présente un alésage de trou borgne ou un évidement (40) s'étendant dans la direction radiale.

8. Outil selon la revendication 7, dans lequel l'élément d'embout (24) présente, sur un côté opposé à l'alésage de trou borgne ou à l'évidement (40), une rainure (42) qui s'étend parallèlement à l'axe longitudinal de plaquette de coupe (34).

9. Outil selon la revendication 8, l'outil (10) présentant en outre un élément d'ajustement (56) qui s'engage dans la rainure (42) en vue de l'ajustement de la plaquette de coupe (14).

10. Outil selon la revendication 9, dans lequel la rainure (42) présente une section transversale en forme de V et l'élément d'ajustement (56) est une vis de serrage avec une pointe conique.

11. Outil selon l'une quelconque des revendications 1 à 10, dans lequel l'élément de fixation (16) est une vis de serrage avec une pointe conique.

12. Outil selon les revendications 9, 10 et 11, dans lequel le porte-outil (12) présente un premier alésage de porte-outil (58) avec un premier filetage (60) qui correspond à la vis de serrage servant d'élément de fixation (16), et dans lequel le porte-outil (12) présente un deuxième alésage de porte-outil (62) avec un deuxième filetage (64) qui correspond à la vis de serrage servant d'élément d'ajustement (56), le premier et le deuxième alésage de porte-outil (58, 62) s'étendant à chaque fois dans la direction radiale perpendiculairement à l'axe longitudinal de porte-outil (18) et étant réalisés sous forme d'alésages de passage.

13. Outil selon la revendication 12, dans lequel le premier alésage de porte-outil (58) présente un premier axe médian (66) et le deuxième alésage de porte-outil (62) présente un deuxième axe médian (68), le premier et le deuxième axe médian (66, 68) s'étendant parallèlement l'un à l'autre et étant décalés l'un par rapport à l'autre le long de l'axe longitudinal de porte-outil (18).

14. Outil selon l'une quelconque des revendications 1 à 13, dans lequel l'élément d'embout (24) présente au moins un alésage de réfrigérant (70) qui est réalisé sous forme de trou traversant.

15. Outil (10) pour l'usinage par enlèvement de copeaux d'une pièce, comprenant :
- une plaquette de coupe (14) avec une tige (32) qui s'étend le long d'un axe longitudinal de plaquette de coupe (34), et avec au moins une arête de coupe (38), la plaquette de coupe (14) étant au moins en partie constituée d'un premier matériau ;
- un porte-outil (12) qui s'étend le long d'un axe longitudinal de porte-outil (18) et qui présente au niveau d'une extrémité frontale (20), pour recevoir la tige de plaquette de coupe (32), un logement de plaquette de coupe (22) qui est réalisé sous forme d'évidement en forme de pot dans le porte-outil (12),
**caractérisé en ce que** l'outil
- contient un élément d'embout (24) qui est connecté fixement à la plaquette de coupe (14) et qui s'étend dans la direction périphérique autour de la tige de plaquette de coupe (32), l'élément d'embout (24) étant constitué au moins en partie d'un deuxième matériau qui est différent du premier matériau ; et **en ce que** l'outil
- contient un élément de fixation (16) pour la fixation de la plaquette de coupe (14) au porte-outil (12), l'élément de fixation (16), dans l'état monté de l'outil (10), venant en contact avec l'élément d'embout (24) afin de fixer la plaquette de coupe (14) au porte-outil (12),
l'élément d'embout (24) présentant au moins un alésage de réfrigérant (70) qui est réalisé sous forme de trou traversant.
